# EUROPEAN PATENT APPLICATION

(11) **EP 4 530 980 A1**
(43) Date of publication of application: **02.04.2025**
(21) Application number: 24202450.3
(22) Date of filing: 25.09.2024
(51) Int. Cl.: G06T 7/11, G06T 7/174, G06T 7/194

(54) **IMAGE PROCESSING APPARATUS, CONTROL APPARATUS, SYSTEM, CONTROL METHOD OF IMAGE PROCESSING APPARATUS, AND PROGRAM**

(30) Priority: 27.09.2023 JP 2023164909
(71) Applicant: CANON KABUSHIKI KAISHA, Tokyo 146-8501 (JP)
(72) Inventor: ITO, Hironao, Tokyo, 146-8501 (JP)
(74) Representative: TBK

(57) **Abstract**

An image processing apparatus (21) obtains a plurality of captured images obtained by image capturing of a plurality of image capturing units, extracts foreground regions from the plurality of captured images by a background difference method, and generates background images used in the background difference method while updating the background images based on the plurality of captured images. In the generation, the background images are updated according to an update method of the background images set for each of groups to which the plurality of image capturing units are classified based on targets of interest of the respective image capturing units in the image capturing, by using the captured images obtained by one or a plurality of the image capturing units included in the group.

## Description

### BACKGROUND

### Field

The present disclosure relates to a technique for extracting a foreground region from an image.

### Description of the Related Art

A method of extracting an image region (hereinafter, referred to as "foreground region") corresponding to an object (hereinafter referred to as "foreground object") to be a foreground from an image (hereinafter, referred to as "captured image") obtained by image capturing performed by an image capturing apparatus is used for various purposes, and there are various methods of extracting the foreground region. Such methods include, for example, a so-called background difference method in which the captured image and an image (hereinafter, referred to as "background image") of a background obtained in one way or another are compared with each other to extract, as a foreground region, pixels of the captured image whose pixel values vary from those of the corresponding pixels in the background image by a value equal to or higher than a predetermined threshold. In the extraction of the foreground region by the background difference method, in the case where a difference between the captured image and the background image increases due to a dynamic change in the background or a change in ambient light such as sunlight or illumination, the foreground region cannot be appropriately extracted.

In view of this, Japanese Patent Laid-Open No. 2021-163303 discloses a technique of updating a generated background image at a set timing. Using the technique of Japanese Patent Laid-Open No. 2021-163303 allows a region that is a background to be written as the background image and not to be extracted as the foreground region even in the case where the background dynamically changes or there is a change in ambient light such as sunlight or illumination.

### SUMMARY

The present disclosure in its first aspect provides an image processing apparatus as specified in claims 1 to 10.

The present invention in its second aspect provides a control apparatus as specified in claim 11.

The present disclosure in its third aspect provides a system as specified in claim 12.

The present disclosure in its fourth aspect provides a control method of an image forming apparatus as specified in claim 13.

The present disclosure in its fifth aspect provides a program as specified in claim 14.

Further features of the present disclosure will become apparent from the following description of exemplary embodiments with reference to the attached drawings.

### BRIEF DESCRIPTION OF THE DRAWINGS

FIG. 1 is a diagram illustrating a configuration example of a system.
FIG. 2 is a diagram illustrating a hardware configuration example of an apparatus.
FIG. 3 is a diagram illustrating a software configuration example of an image processing apparatus.
FIG. 4 is a diagram for explaining a background partial update function.
FIG. 5 is a diagram illustrating a software configuration example of a control apparatus.
FIG. 6 is a diagram illustrating a camera classification information example.
FIG. 7 is a diagram for explaining classification of cameras.
FIG. 8Ais a flowchart illustrating a flow of background generation setting control processing, and FIG. 8B is a flowchart illustrating a flow of background generation setting processing.
FIG. 9 is a diagram illustrating setting parameter examples of each of background update modes.
FIG. 10 is a diagram illustrating a UI example for background update setting.
FIG. 11 is a diagram illustrating a UI example for background update setting.
FIG. 12 is a flowchart illustrating a flow of background update processing.

### DESCRIPTION OF THE EMBODIMENTS

The technique disclosed in Japanese Patent Laid-Open No. 2021-163303 has such a problem that the update of the background image is difficult to perform in the case where a person is present for a long period in partial regions of entire image capturing regions of multiple image capturing apparatuses. For example, in a case of baseball, white lines around a home base among white lines drawn on a ground tend to disappear during a game and an image tends to change. Since a catcher and an umpire are present for a long period near the home base, the above technique has such a problem that the update of the background image is difficult to perform.

Embodiments of the present disclosure are explained below with reference to the drawings. Note that the invention according to the scope of claims is not limited to the following embodiments, and not all of combinations of features explained in the embodiments are necessarily essential for solving means of the invention. Note that, in each of the drawings, the same elements are denoted by the same reference numerals, and repeating explanation is omitted or simplified. Note that each of the steps in the flowcharts is described by being added with "S" in the front.

### [First Embodiment]

A virtual viewpoint image generation system according to the present embodiment is explained. In the present embodiment, explanation is given of a mode in which: multiple image capturing apparatuses are grouped depending on image capturing targets; a timing at which background update is performed is set for each group of image capturing apparatuses; and the background update is performed at a moment where the image capturing target does not include a human figure to be the foreground object.

### (System Configuration)

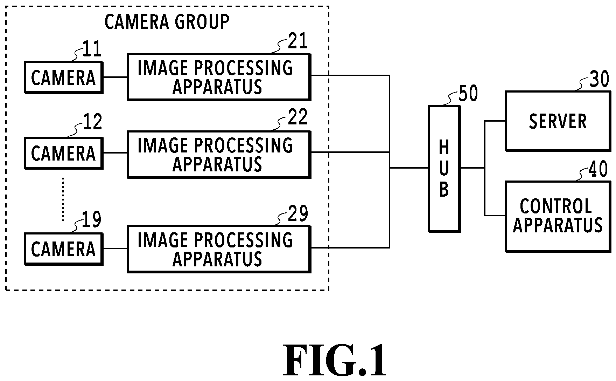

FIG. 1 is a diagram illustrating a configuration example of the virtual viewpoint image generation system according to the present embodiment. The virtual viewpoint image generation system includes multiple cameras (image capturing apparatuses) 11 to 19, image processing apparatuses 21 to 29 that process captured images obtained by image capturing of the cameras, a server 30, and a control apparatus 40 that controls the cameras 11 to 19, the image processing apparatuses 21 to 29, and the like. Note that the image processing apparatuses 21 to 29 are connected to the server 30 and the control apparatus 40 via a hub 50.

The cameras 11 to 19 are arranged at different positions, and capture multiple images from multiple viewpoints in synchronization. Each of the cameras 11 to 19 captures an image of the foreground object that is a target of interest. Specifically, an image capturing target is set for each of the cameras 11 to 19. The image processing apparatuses 21 to 29 process the captured images obtained by the image capturing of the cameras 11 to 19 corresponding to the image processing apparatuses 21 to 29, respectively. The control apparatus 40 controls processes executed in the server 30.

The server 30 generates and displays a virtual viewpoint image as viewed from a virtual viewpoint (viewpoint of virtual camera). Note that, in this case, the virtual camera is a virtual camera that can be freely moved in an image capturing space. Specifically, the virtual camera can capture an image at a viewpoint different from any of the viewpoints of the installed (arranged) cameras in the image capturing space. Note that certain restrictions may be provided for the position and orientation of the virtual camera. The server 30 obtains the captured images and foreground information from the image processing apparatuses 21 to 29. Moreover, the server 30 obtains in advance extrinsic parameters that are coordinate information of the cameras 11 to 19 as well as intrinsic parameters and distortion parameters of lenses. The server 30 generates a three-dimensional model of the foreground based on the foreground information and the parameters of the cameras. Furthermore, a background three-dimensional model is registered in advance in the server 30. The server 30 generates a foreground image by mapping texture data onto the foreground three-dimensional model by using the captured images based on the virtual viewpoint inputted by a user, and generates the background image from the background three-dimensional model.

Then, the server 30 continuously generates the virtual viewpoint images by combining the foreground images and the background images, and displays the generated virtual viewpoint images. Note that a method of generating the virtual viewpoint image is not limited to this. Various methods such as, for example, a method of generating the virtual viewpoint image by performing projective transformation of the captured images without using the three-dimensional models may be used as the method of generating the virtual viewpoint image.

Moreover, as additional information, in the following explanation, the term image is assumed to include concepts of both of a moving image and a still image, unless otherwise noted. Specifically, the virtual viewpoint image generation system can process both of the still image and the moving image.

### (Hardware Configuration)

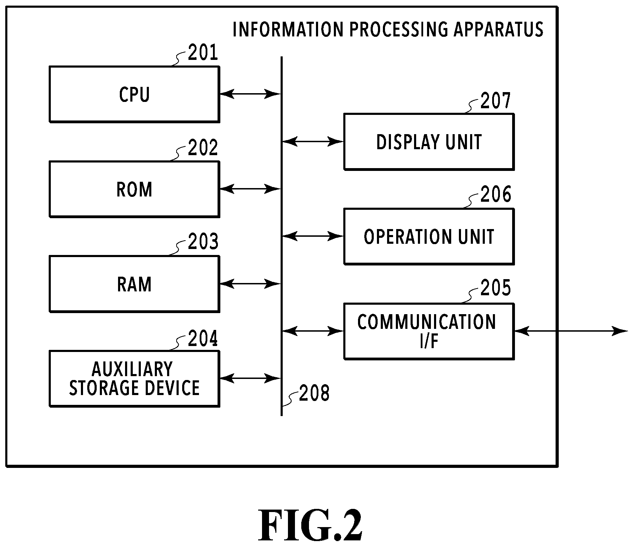

Hardware configurations of the information processing apparatuses such as the server 30 and the control apparatus 40 are explained by using FIG. 2. Note that the image processing apparatuses 21 to 29 and the like also basically have similar hardware configurations. Each information processing apparatus includes a CPU 201, a ROM 202, a RAM 203, an auxiliary storage device 204, a communication I/F 205, an operation unit 206, a display unit 207, and a bus 208.

The CPU 201 is a central processing unit, and controls the entire information processing apparatus by using programs and data stored in the ROM 202 and the RAM 203. Note that the configuration may be such that the information processing apparatus includes one or multiple pieces of dedicated hardware different from the CPU 201, and the dedicated hardware executes at least part of processing otherwise performed by the CPU 201. Examples of the dedicated hardware include an application specific integrated circuit (ASIC), a field programmable gate array (FPGA), a digital signal processor (DSP), and the like.

The ROM 202 stores setting data of the information processing apparatus and programs and the like that require no change such as a boot program. The RAM 203 includes an area for temporarily storing programs and data loaded from the ROM 202, data obtained from the outside via the communication I/F 205, and the like. Moreover, the RAM 203 includes a work area used in the case where the CPU 201 executes various processes. Specifically, the RAM 203 can be assigned as, for example, a frame memory, or provide other various areas as appropriate.

The auxiliary storage device 204 is formed of, for example, an HDD, an SSD, or the like. The auxiliary storage device 204 stores input data such as image data and audio data. Moreover, the auxiliary storage device 204 stores various types of data and programs such as tables referred to in various processes to be described later, an operating system (OS), and various application programs for causing the CPU 201 to implement functions of units to be described later.

The communication I/F 205 can connect with networks such as a LAN and the Internet and with other apparatuses such as a projection apparatus and a display apparatus, and the information processing apparatus can obtain and transmit various pieces of information via the communication I/F 205.

The operation unit 206 includes, for example, a display device formed of a liquid crystal display, an LED, and the like and an input device formed of a keyboard, a mouse, and the like. The operation unit 206 receives operations made by the user via a user interface or the like, and inputs various instructions into the CPU 201. Note that the operation unit 206 may be a touch panel having functions of the display device and the input device. The display unit 207 is formed of, for example, a display device such as a liquid crystal display and an LED, and displays a processing result of the CPU 201.

The computer programs and data saved in the auxiliary storage device 204 are loaded onto the RAM 203 as appropriate according to control by the CPU 201, and become processing targets of the CPU 201. The bus 208 is a bus that connects the above-mentioned units to one another.

The present embodiment is also implemented by supplying a storage medium recording codes of a computer program that implements the above-mentioned functions to a system and causing the system to read out and execute the codes of the computer program. In this case, the codes of the computer program read out from the storage medium themselves implement the above-mentioned functions of the embodiment, and the storage medium storing the codes of the computer program is included in the technique of the present disclosure. Moreover, the present embodiment includes a case where an OS or the like operating on a computer performs all or part of actual processes by using the above-mentioned hardware based on instructions of the codes of the program, and implements the above-mentioned functions through these processes.

Moreover, the functions may be implemented in a following form. Specifically, the computer program code read out from the storage medium is written into a memory included in a function expansion card inserted into a computer or a function expansion unit connected to a computer. Then, a CPU or the like included in the function expansion card or the function expansion unit performs all or part of the actual processes based on instructions of the codes of the computer program, and implements the above-mentioned functions. This case is also included in the present embodiment.

In the case where the present embodiment is applied to the above-mentioned storage medium, the codes of the computer program corresponding to the above-explained processes are stored in the storage medium.

### (Software Configuration of Image Processing Apparatus)

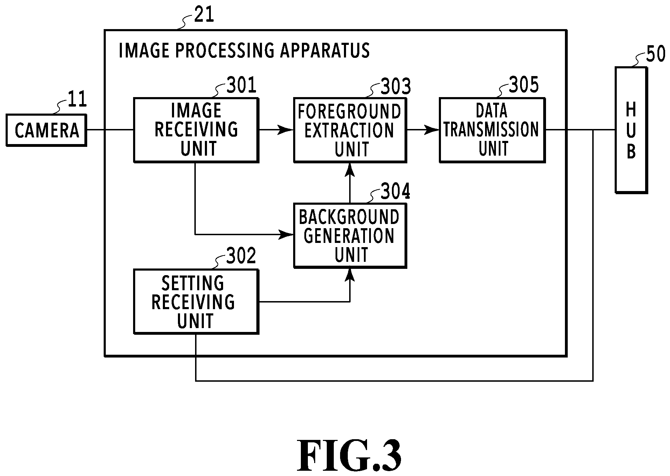

FIG. 3 is a diagram illustrating a software configuration of the image processing apparatus 21. Note that the image processing apparatuses 22 to 29 basically have the same software configuration. The image processing apparatus 21 includes an image receiving unit 301, a setting receiving unit 302, a foreground extraction unit 303, a background generation unit 304, and a data transmission unit 305.

The image receiving unit 301 receives the captured image (input image) obtained by the camera 11 performing the image capturing. The received captured image is outputted to the foreground extraction unit 303 and the background generation unit 304. The setting receiving unit 302 receives various settings for the image processing apparatus 21 that performs foreground background separation processing, from the control apparatus 40 via the hub 50, and executes setting on the foreground extraction unit 303, the background generation unit 304, the data transmission unit 305, and the like depending on the received various settings.

The foreground extraction unit 303 compares the input image (captured image) and the background image generated based on the input image, and extracts the foreground region from the input image based on a result of the comparison. There are various methods of comparing the background image and the input image. For example, pixels in the background image and the input image that vary in value of each of R, G, and B by an amount equal to or larger than a threshold (threshold of foreground extraction) may be extracted from the input image as the foreground region. Moreover, any method may be used as long as it is a method of comparing the images. Information on the foreground region is assumed to be a 1-bit image that has the same image size as the captured image obtained by the image capturing of the image capturing apparatus and in which the foreground region is represented in white and the background is represented in black. Moreover, the information on the foreground region only needs to be information that can indicate the foreground region, and the method is not limited to a particular method.

The background generation unit 304 determines static pixels to be the background based on the input images (captured images) of multiple frames, and generates an image formed of the static pixels as the background image. The multiple frames only need to be frames in which pixel values of identical pixels can be compared, and the number of frames only needs to be, for example, two or more. For example, the static pixels may be identical pixels in the input images of the multiple frames that have identical pixel values or that have pixel values varying within a threshold (threshold of background generation). Note that the threshold of background generation is smaller than the threshold of foreground extraction. Moreover, the background generation unit 304 receives a setting relating to the background generation from the setting receiving unit 302, and generates the background image based on the received setting. The above setting includes a setting referred to as an update cycle at which the background is updated and three settings referred to as determination time, determination cycle, and determination threshold relating to processing of determining pixels to be the background.

The update cycle at which the background is updated is a cycle of updating an existing background by using the generated background. For example, in the case where four seconds is set as the update cycle, the background is updated once every four seconds. The determination time is total time of determination of whether or not each pixel is the background, and the determination cycle is a cycle at which the determination of whether or not each pixel is the background is performed once. For example, in the case where 64 seconds is set as the determination time and four seconds is set as the determination cycle, determination performed once every four seconds is repeated 16 times, and then final determination of whether or not each pixel is the background is performed.

In the determination of background, whether or not each pixel is the background is determined once in every determination cycle, and the pixels always determined to be the background during the determination time are incorporated in the existing background image to generate a new background image.

The determination of whether or not each pixel is the background is performed by determining whether the pixel is static, specifically, by comparing the captured image obtained by the image capturing apparatus in the previous determination cycle with the current captured imaged obtained by the image capturing apparatus, and determining that the pixel whose color difference is within the determination threshold is the background image. In the present embodiment, the color is expressed by a value from 0 to 1023 for each of the colors of R, G, and B, and the setting of the determination threshold is also set to a value from 0 to 1023 for each of R, G, and B.

A method of updating the background is explained. In the case where the determination time is 64 seconds and the determination cycle is four seconds, the current captured image obtained by the image capturing apparatus and the captured image obtained by the image capturing apparatus four seconds before are compared with each other once every four seconds for 16 times, and the pixels always determined to be the background are incorporated as the new background image. The pixels that are actually incorporated in this case are the pixels of the captured image obtained by the image capturing of the image capturing apparatus in the sixteenth determination.

### (Background Partial Update Function)

Moreover, regarding the background generation, the image processing apparatus may have a function of setting whether to enable or disable the background update for each of regions of the image. This function is a function of performing background update target setting for each region by setting a partial update region setting image that has the same image size as the input image and in which an enabled region as a background update target region is represented in white and a disabled region as a background update target region is represented in black. This function is referred to as a background partial update function. The background partial update function can be set to ON or OFF. In the case where the background partial update function is set to ON, the background is partially updated based on the partial update region setting image set in advance. Specifically, only the background of the target region in the entire input image is updated. In the case where the background partial update function is set to OFF, all regions in the entire input image are set as the target of background update.

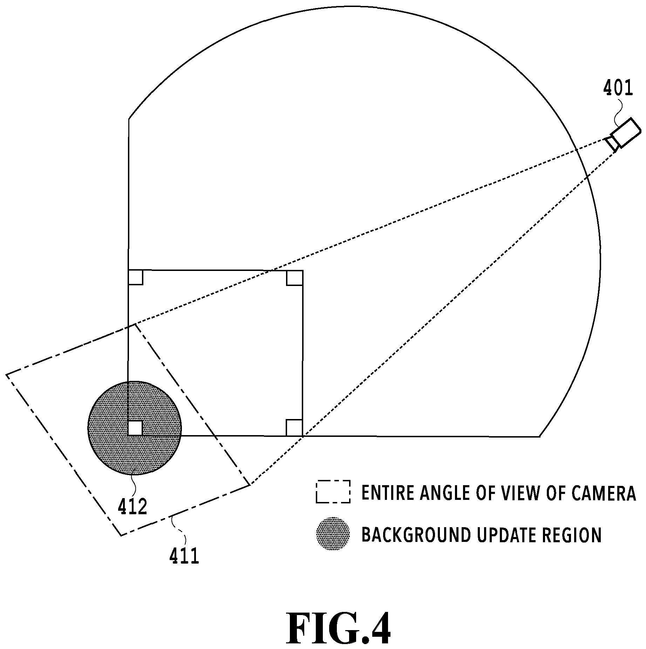

FIG. 4 is a diagram for explaining the background partial update function. FIG. 4 illustrates an application example of the background partial update function to a camera whose image capturing target is set to the catcher.

In the case where the background partial update function is set to OFF for a camera 401 whose image capturing target is set to the catcher, an entire region 411 of a captured image corresponding to an entire angle of view of the camera 401 is handled as the background update target. In the case where the background partial update function is set to ON for the camera 401 whose image capturing target is set to the catcher, only a region 412 set in advance in the entire angle of view of the camera 401 is handled as the background update target.

For example, in the case where baseball is the image capturing target, the background partial update function is set to ON only for a region around the home base in the image captured by the image capturing apparatus. Such setting enables update of the background even in a state where there is a person in the angle of view of the camera, if there is no person in the region around the home base that is the region set as the background partial update target.

The data transmission unit 305 transmits the captured image and the extracted foreground information.

### (Software Configuration of Control Apparatus)

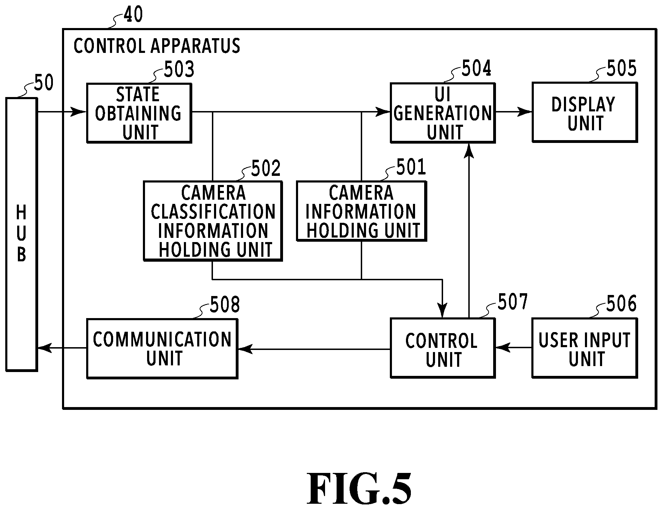

FIG. 5 is a diagram illustrating a software configuration example of the control apparatus 40. The control apparatus 40 includes a camera information holding unit 501, a camera classification information holding unit 502, a state obtaining unit 503, an UI generation unit 504, a display unit 505, a user input unit 506, a control unit 507, and a communication unit 508.

The camera information holding unit 501 holds information on the cameras. This information includes identification information of the cameras, information on connection groups to which the cameras belong, connection destinations of the cameras, and installed coordinate information of the cameras. For example, assume that multiple cameras are connected in a daisy chain, and there are two connection groups. In this case, the connection group information is information indicating the connection group to which each camera belongs out of the two connection groups. The connection destinations of the cameras indicate apparatuses connected via transmission cables (network cables). The installed coordinate information of the cameras is XYZ coordinate information in the case where a predetermined position (for example, the center of a baseball field 710) is set as the origin.

The camera classification information holding unit 502 holds the camera classification information of the cameras 11 to 19 and the image processing apparatuses 21 to 29 connected to these cameras. The camera classification information includes the image capturing targets of the cameras, elevation angles of the cameras, and information on camera groups.

### (Camera Classification Information)

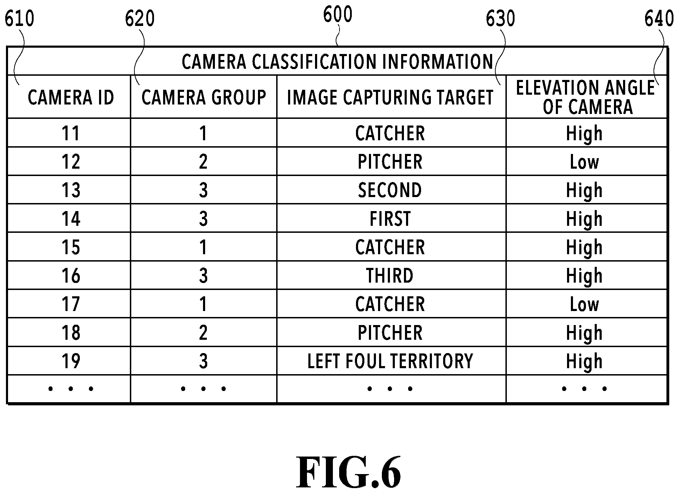

FIG. 6 is a diagram illustrating an example of the camera classification information. The camera classification information 600 includes information on each of a camera ID 610, a camera group 620, an image capturing target 630, and an elevation angle 640 of each camera.

The camera classification information 600 is information manually set by the user in advance. Although the classification information is manually set in the present embodiment, the present embodiment is not limited to this. For example, the configuration may be such that the orientation and direction of each camera are automatically detected, and the image capturing target is then identified by using these parameters to automatically create the camera classification information. Moreover, although an example in which information on nine cameras is managed is explained in the present embodiment for simplification, the present embodiment is not limited to this example. The camera classification information may manage information on fewer than nine cameras or more than nine cameras, and may manage information on, for example, about 100 cameras.

The image capturing target 630 of each camera is the target of image capturing of the camera. In the present embodiment, baseball is used as an example, and each position in baseball or a baseball field is set as the target. An expression method of the target is not limited to this, and for example, the target may be expressed by sectioning the entire image capturing region of the multiple cameras, and assigning a number to each of areas. For example, in the case of soccer or the like, the image capturing region may be divided into areas such as penalty areas, a right side, and a left side. Moreover, some cameras may each have multiple positions as the image capturing targets, and have multiple pieces of image capturing target information.

### (Classification of Cameras)

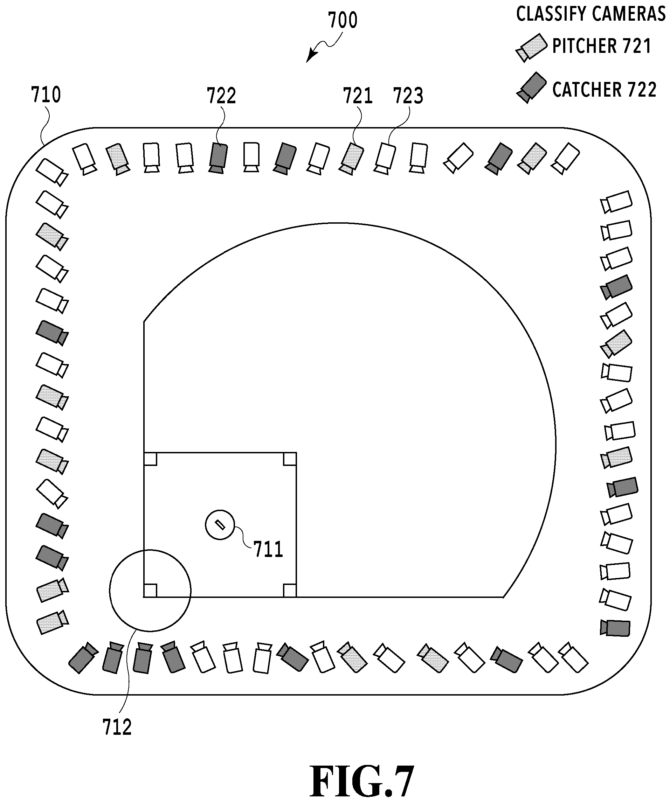

FIG. 7 is a diagram for explaining classification of cameras. FIG. 7 illustrates a case where the present embodiment is applied to baseball. A system 700 includes multiple cameras 721 whose image capturing targets are set to a pitcher (pitcher mound) 711 in the baseball field 710 and multiple cameras 722 whose image capturing targets are set to a catcher (home base). Specifically, in the example of FIG. 7, the multiple cameras are classified into the cameras 721, the cameras 722, and cameras 723 whose image capturing targets are set, respectively to the pitcher, the catcher, and players other than the pitcher or the catcher.

The elevation angle 640 of each camera is an angle of an image capturing direction of the camera with respect to a ground in the case where the ground is set as a reference. In the present system, the cameras are attached at positions above the ground, and capture images while being directed downward. Accordingly, a camera whose elevation angle is equal to or lower than 30 degrees is classified as low angle, and a camera whose elevation angle is higher than 30 degrees is classified as high angle.

The camera group 620 is a group in which multiple cameras are grouped depending on a target desired to be controlled. For example, classifying the cameras whose image capturing targets are the catcher into the same group allows the user to give an instruction such as updating of the background to the cameras in this group at a moment where no person is around the home base. In determination of classifying the each of multiple cameras into one of multiple groups, restriction based on the angle (elevation angle of the camera) may be further provided. Specifically, one of the multiple groups to which each of the multiple cameras are classified may be determined depending on the elevation angle of the camera at the moment of image capturing. In the case of the low-angle camera, a possibility that the low-angle camera captures a player standing in front of or behind an area around the home base in addition to the area around the home base is high. Accordingly, only the high-angle camera is set as the target, and this can reduce a possibility that the update is hindered by players other than the image capturing target. In this section, although the method in which one of the multiple groups to which each of the multiple cameras is classified is determined by using the camera information is explained, the present embodiment is not limited to this. For example, the user may determine one of the multiple groups to which each of the multiple cameras is classified as desired.

Returning to the explanation of FIG. 5, the state obtaining unit 503 obtains state information of each of the cameras 11 to 19 and state information of each of the image processing apparatuses 21 to 29, and outputs the obtained information to the UI generation unit 504.

The UI generation unit 504 generates a UI image indicating states of the system and the cameras based on information obtained from the camera information holding unit 501, the camera classification information holding unit 502, and the state obtaining unit 503.

The display unit 505 includes a frame buffer and a display panel. The display unit 505 stores (performs overwriting with) a display image outputted from the UI generation unit 504 in the frame buffer. Then, the display unit 505 reads out the display image stored in the frame buffer at a predetermined refresh rate, and displays the display image on the display panel. For example, it can be said that the display unit 505 performs display control such that a UI screen to be described later in detail is displayed on the display panel. The display panel is, for example, a liquid crystal panel or an organic EL panel.

The user input unit 506 receives operation information inputted from a not-illustrated controller, and outputs the received information to the control unit 507. The controller is, for example, a keyboard, a mouse, a touch panel, a joystick, or the like.

The control unit 507 outputs, based on the operation information from the user input unit 506, a control instruction to each of the units of the control apparatus 40. In the present embodiment, the user gives an instruction for background generation setting, and the control unit 507 executes control in response to the user instruction inputted via the user input unit 506. In this case, the image processing apparatus to be controlled is determined (designated) based on information obtained from the camera classification information holding unit 502. Any of the following five methods can be used as a method of this designation.

### (Designation Method 1)

Designation Method 1 is a method of designating the image capturing target. In this designation method, for example, cameras whose image capturing targets are the catcher are designated. In this case, if the designation is performed based on the camera classification information 600, cameras with camera IDs of 11, 15, and 17 are designated.

### (Designation Method 2)

Designation Method 2 is a method of designating cameras by using the elevation angle of the camera. In this designation method, for example, cameras whose camera elevation angles are high are designated. In this case, if the designation is performed based on the camera classification information 600, cameras with camera IDs of 11, 13, 14, 15, 16, 18, and 19 are designated.

### (Designation Method 3)

Designation Method 3 is a method of designating cameras by using a combination of the image capturing target and the elevation angle of the camera. In this designation method, for example, cameras whose image capturing targets are the catcher and whose camera elevation angles are high are designated. In this case, if the designation is performed based on the camera classification information 600, cameras with camera IDs of 11 and 15 are designated.

### (Designation Method 4)

Designation Method 4 is a method of designating multiple image capturing targets. In this designation method, for example, cameras whose image capturing targets are the catcher or the pitcher are specified. In this case, if the designation is performed based on the camera classification information 600, cameras with camera IDs of 11, 12, 15, 17, and 18 are designated.

### (Designation Method 5)

Designation Method 5 is a method of designating cameras by using a camera group. In this designation method, for example, cameras whose camera groups are 3 are specified. In this case, if the designation is performed based on the camera classification information 600, cameras with camera IDs of 13, 14, 16, and 19 are designated.

Moreover, the control unit 507 instructs the image processing apparatuses 21 to 29 to start and stop the foreground background separation and to start and stop data transmission.

The communication unit 508 outputs the control information from the control unit 507 to the outside. Moreover, the communication unit 508 receives a notification indicating a result of control, and outputs the received notification to the control unit 507.

### (Background Generation Setting Control Processing)

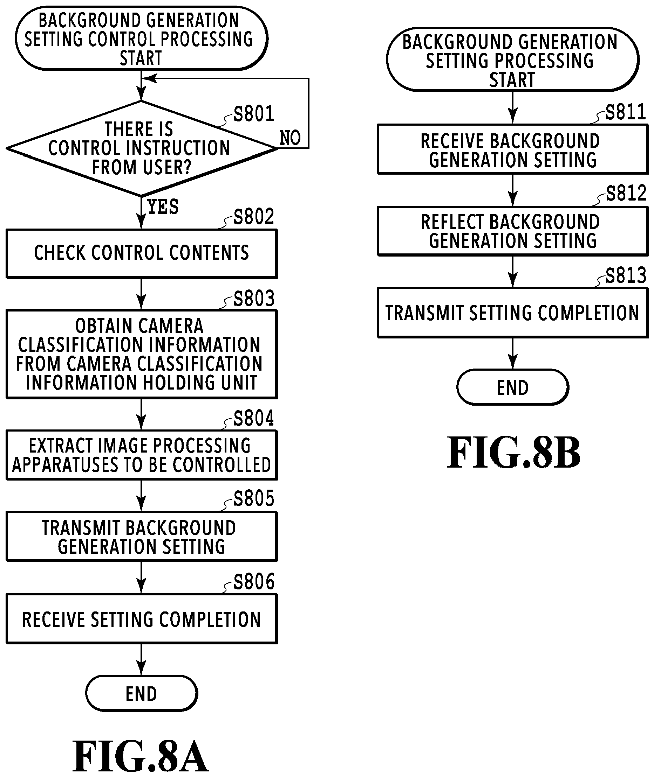

FIG. 8Ais a flowchart illustrating a flow of background generation setting control processing. Hereinafter, the background generation setting control processing is explained according to the flowchart.

In S801, the CPU 201 (user input unit 506) of the control apparatus 40 checks (determines) whether or not there is a control instruction from the user. In the case where the CPU 201 of the control apparatus 40 determines that there is no control instruction from the user (NO in S801), the CPU 201 keeps waiting for a control instruction. In the case where the CPU 201 of the control apparatus 40 determines that there is a control instruction from the user (YES in S801), a process of S802 is executed.

In S802, the CPU 201 (control unit 507) of the control apparatus 40 checks contents of the control instruction inputted into the user input unit 506. For example, the contents of the control instruction are assumed to be background generation settings. The control contents include a setting target and setting contents. The setting target is one of the identification information of camera in the information on camera and the image capturing target and the camera group in the camera classification information. In the case of the identification information of camera, the setting target is camera 11 or the like indicating the camera ID. In the case of designation using the image capturing target in the camera classification information, the setting target is information indicating the image capturing target such as the catcher or the pitcher. In the case of the camera group in the camera classification information, the setting target is camera group 1 or the like. Moreover, the setting contents are the settings relating to background generation as described above. In this example, the setting target is assumed to be cameras whose image capturing targets are the catcher, and the setting contents are assumed to be such contents that the determination cycle of the background generation is set to 32 seconds. Note that, although the case where the setting contents are the determination cycle of the background generation is explained in this example, the present embodiment is not limited to this. The setting contents may be the determination time or the determination threshold, any two of the determination time, the determination cycle, and the determination threshold, or all of the determination time, the determination cycle, and the determination threshold.

In S803, the CPU 201 (control unit 507) of the control apparatus 40 obtains the camera classification information from the camera classification information holding unit 502.

In S804, the CPU 201 (control unit 507) of the control apparatus 40 extracts image processing apparatuses to be controlled. The image capturing targets of the cameras 11, 15, and 17 are the catcher, and the image processing apparatuses 21, 25, and 27 to which the captured images of these cameras 11, 15, and 17 are inputted are extracted as the image processing apparatuses to be controlled.

In S805, the CPU 201 (control unit 507) of the control apparatus 40 outputs the background generation setting (setting of the determination cycle of 32 seconds) to the image processing apparatuses 21, 25, and 27 via the communication unit 508. Note that each image processing apparatus receives information on the background generation setting in S811 to be described later.

In S806, the CPU 201 (communication unit 508) of the control apparatus 40 receives a setting completion notification, and outputs the setting completion notification to the control unit 507. The CPU 201 (control unit 507) of the control apparatus 40 determines that the background generation setting is completed, and terminates the background generation setting control processing illustrated in FIG. 8A.

### (Background Generation Setting Processing)

FIG. 8B is a flowchart illustrating a flow of background generation setting processing. Hereinafter, the background generation setting processing is explained according to the flowchart. Note that, since the processes in the image processing apparatuses 21, 25, and 27 are identical, explanation is given by using the process in the image processing apparatus 21 as an example.

In S811, the CPU 201 (setting receiving unit 302) of the image processing apparatus 21 waits for transmission of the background generation setting from the control apparatus 40, and receives the background generation setting transmitted from the control apparatus 40. The received background generation setting is outputted to the background generation unit 304.

In S812, the CPU 201 (background generation unit 304) of the image processing apparatus 21 checks the setting contents of the received background generation setting, and executes the background generation setting by using the checked setting contents to reflect the background generation setting. For example, the determination cycle of whether or not each pixel is the background is set to 32 seconds.

In S813, the CPU 201 (background generation unit 304) of the image processing apparatus 21 notifies the setting receiving unit 302 of setting completion, and the CPU 201 (setting receiving unit 302) of the image processing apparatus 21 transmits the setting completion notification to the control apparatus 40.

### (Background Generation Setting)

Explanation is given of the case of using a UI screen including buttons linked to background update modes in which several settings prepared in advance are combined to enable work of background generation setting to be performed more quickly. Specifically, explanation is given of the case of displaying a UI screen that presents update methods in a mode where the user can designate the update methods.

First, five modes of stop, low speed, mid-speed, high speed, and instant that vary in speed of updating the background are prepared, and a setting corresponding to each of the five modes is linked to the mode.

The "stop" mode is a mode for setting a state where the background is not updated at all. The "low speed" mode is a mode for setting a state where the background is slowly updated and where the background is updated at lower speed than normal speed. The "mid-speed" mode is a mode for setting a state where the background is updated at the normal speed. The "high speed" mode is a mode for setting a state where the background is quickly updated and where the background is updated at higher speed than the normal speed. The "instant" mode is a mode for setting a state where the background is instantly updated and where the captured images obtained by the image capturing of the camera are directly reflected in the background.

### (Setting Parameters of Each Background Update Mode)

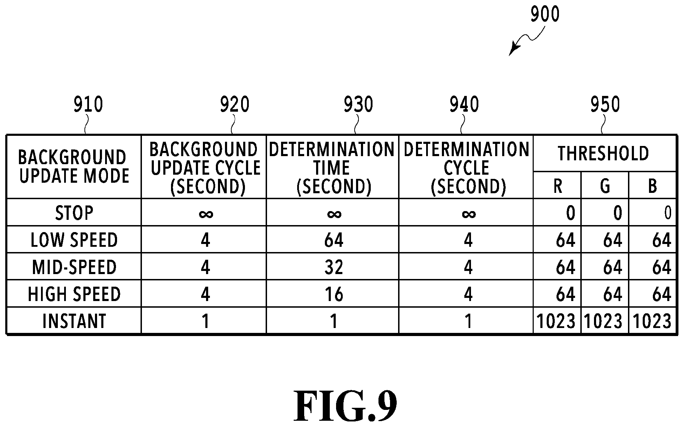

FIG. 9 is a diagram illustrating setting parameter examples for implementing each of the background update modes. Setting parameters 900 includes information on items of a background update mode 910, a background update cycle (second) 920, a determination time (second) 930, a determination cycle (second) 940, and a threshold 950. Specifically, each of the modes of "stop", "low speed", "mid-speed", "high speed", and "instant" in the background update mode 910 is linked to the information on the items of background update cycle (second) 920, the determination time (second) 930, the determination cycle (second) 940, and the threshold 950 for background determination.

For example, in the case where the "stop" mode is selected for the background update mode 910, the "background update cycle (second)" 920 is set to ∞ (infinite), and the update of the background is stopped. In actual, since ∞ (infinite) cannot be set as a numerical value, for example, a specific value such as 65535 is set to perform control of stopping the update of background.

In the case where the "low speed" mode is selected for the background update mode 910, the "determination time (second)" 930 is set to 64 seconds, and the background is updated at low speed. Specifically, in the case where the "low speed" mode is selected, the determination performed once every four seconds by using the threshold (pixels values of RGB) is repeated 16 times, and then the final determination of whether or not each pixel is the background is performed. This can prevent the case where a player, an umpire, or the like that does not move very much during a game is determined to be the background. In the case where the "mid-speed" mode is selected for the background update mode 910, the "determination time (second)" 930 is set to 32 seconds, and the background is updated at mid-speed. Specifically, in the case where the "mid-speed" mode is selected, the determination performed once every four seconds by using the threshold (pixels values of RGB) is repeated eight times, and then the final determination of whether or not each pixel is the background is performed. In the case where the "high speed" mode is selected for the background update mode 910, the "determination time (second)" 930 is set to 16 seconds, and the background is updated at high speed. Specifically, in the case where the "high speed" mode is selected, the determination performed once every four seconds by using the threshold (pixels values of RGB) is repeated four times, and then the final determination of whether or not each pixel is the background is performed.

In the case where the "instant" mode is selected for the background update mode 910, the "determination time (second)" 930 is set to one second, the "determination cycle (second)" 940 is set to one second, the "threshold" 950 for the determination is set to 1023, and the background is instantly updated. Specifically, all pixels in the captured images are determined to be the background, and are updated.

Explanation is given of the case where the above setting of the background update mode is applied to a baseball game. For example, the background update mode 910 is set to the "low speed" mode while the players are playing at predetermined positions on the ground, to slowly incorporate the background. Setting the background update mode 910 to the "high speed" mode or the "instant" mode at a timing at which the players disappear from the predetermined positions on the ground due to an end of an inning or the like allows the background to be quickly updated. Note that, although the case of five modes is explained above, the present embodiment is not limited to this. The modes only have to vary in update speed, and the number of modes may be, for example, smaller than five or larger than five. Moreover, the numerical value set in each of items of the background update cycle (second) 920, the determination time (second) 930, the determination cycle (second) 940, and the threshold 950 in each of the five modes described above is merely an example, and other numerical values may be set.

### (UI Screen for Background Update Setting)

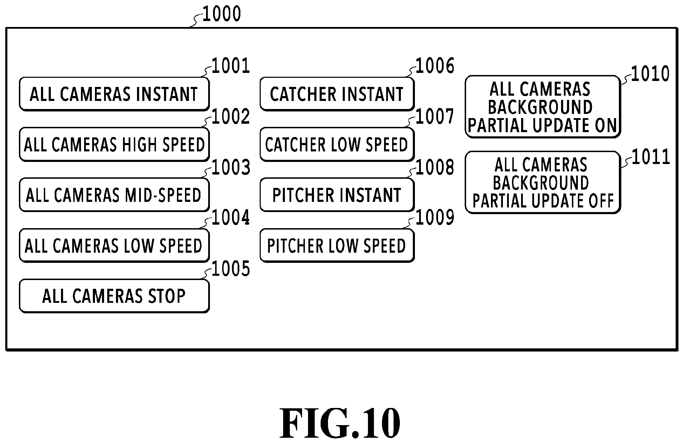

FIG. 10 is a diagram illustrating a UI screen example including setting buttons in which the setting target and the background update mode are combined. Note that, in S801 illustrated in FIG. 8A, the CPU 201 of the control apparatus 40 may determine whether or not there is a control instruction from the user through a UI screen 1000.

The UI screen 1000 includes various buttons for setting the target camera and the background update mode. Specifically, the UI screen 1000 displays speed designation buttons used to designate the speed of updating the background image and partial update designation buttons for designating predetermined regions as the background image update targets, in such a way that these buttons can be selected. The user clicks buttons 1001 to 1011 on the UI screen 1000 with a mouse, and the setting relating to the background generation and linked to the clicked button can be thereby executed. Specifically, the update method is set based on the user operation performed through the UI screen 1000.

The buttons 1001 to 1005 are buttons for setting the background generation mode with all cameras being targets. Specifically, the "all cameras instant" button 1001 is a button for setting the background update mode 910 to the "instant" mode for all cameras. The "all cameras high speed" button 1002 is a button for setting the background update mode 910 to the "high speed" mode for all cameras. The "all cameras mid-speed" button 1003 is a button for setting the background update mode 910 to the "mid-speed" mode for all cameras.

The "all cameras low speed" button 1004 is a button for setting the background update mode 910 to the "low speed" mode for all cameras. The "all cameras stop" button 1005 is a button for setting the background update mode 910 to the "stop" mode for all cameras.

The UI screen 1000 includes the buttons for setting the background update mode 910 to the respective modes for all cameras, and this allows the user to easily set the background update mode 910 to a desired background update mode for all cameras by operating one button. The background generation speed for all cameras can be thereby controlled.

The buttons 1006 to 1009 are buttons for setting the background generation mode with specific cameras being targets. Specifically, the "catcher instant" button 1006 is a button for setting the background update mode 910 to the "instant" mode for the cameras whose image capturing targets are set to the catcher. The "catcher low speed" button 1007 is a button for setting the background update mode 910 to the "low speed" mode for the cameras whose image capturing targets are set to the catcher. Quickly changing the background generation mode by using these buttons in the case where the players disappear from the area around the home base in an end of an inning or the like allows the background update to be performed also in a game where there are few scenes in which the players disappear.

The "pitcher instant" button 1008 is a button similar to the "catcher instant" button 1006 except for the point that it is for the cameras whose image capturing targets are set to the pitcher. The "pitcher low speed" button 1009 is a button similar to the "catcher low speed" button 1007 except for the point that it is for the cameras whose image capturing targets are set to the pitcher.

The buttons 1010 to 1011 are buttons for setting the background partial update function with all cameras being targets. Specifically, the "all cameras background partial update ON" button 1010 is a button for setting the background partial update function to enabled for all cameras. The "all cameras background partial update OFF" button 1011 is a button for setting the background partial update function to disabled for all cameras.

One of the buttons 1001 to 1005, one of the buttons 1006 to 1007, one of the buttons 1008 to 1009, and one of the buttons 1010 to 1111 can be simultaneously set. For example, the "all cameras instant" 1001, the "catcher low speed" 1007, the "pitcher low speed" 1009, and the "all cameras background partial update ON" 1010 can be simultaneously set. In the case, the background update mode of "instant" is set for all cameras other than the cameras whose image capturing targets are the catcher and the pitcher, and the background update mode of "low speed" is set for the cameras whose image capturing targets are the catcher and the pitcher. Moreover, the background partial update function is set for all cameras. Specifically, it can be said that use of the partial regions in the captured images, obtained by the image capturing of the cameras, for the update of the background image is set as the update method based on the user operation through the UI screen 1000.

Note that the buttons 1001 to 1011 illustrated in the UI screen 1000 illustrated in FIG. 10 are merely examples, and buttons corresponding to update speed and image capturing targets other than the pitcher or the catcher may be provided on the UI screen 1000.

### (UI Screen for Background Update Setting)

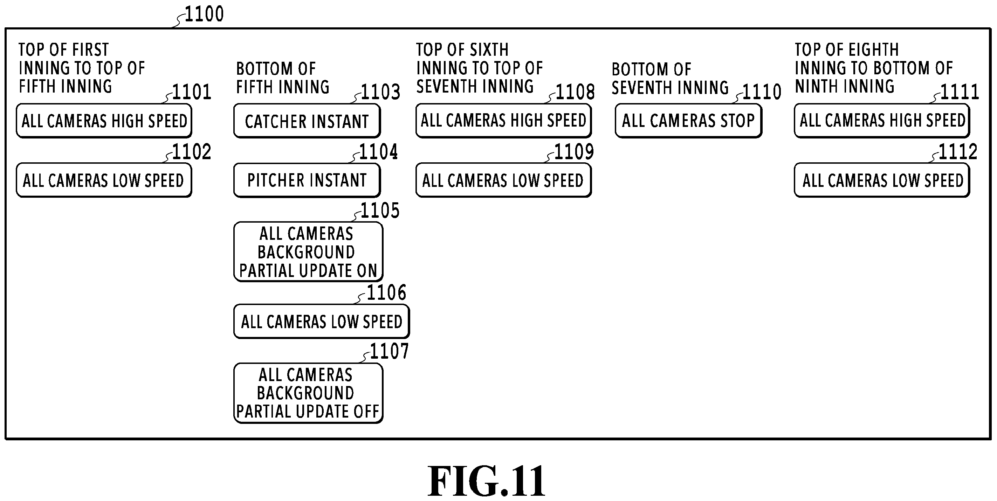

FIG. 11 is a diagram illustrating an UI screen example including setting buttons in which progress of a game is combined with the setting targets and the background update modes. Note that, in S801 illustrated in FIG. 8A, the CPU 201 of the control apparatus 40 may determine whether or not there is a control instruction from the user through a UI screen 1100.

The UI screen 1100 includes various buttons for setting the target camera and the background update mode depending on progress of a baseball game. Specifically, the UI screen 1100 displays speed designation buttons used to designate the speed of updating the background image for units in which the game captured by the cameras progresses, in such a way that these buttons can be selected. The user clicks the buttons 1101 to 1112 on the UI screen 1100 with a mouse, and the setting relating to the background generation and linked to the clicked button can be thereby executed as in the case of the UI screen 1000. Specifically, the update method is set based on the user operation performed through the UI screen 1000.

In the present embodiment, ground keeping is assumed to be performed in the bottom of the fifth inning. Accordingly, the buttons 1103 to 1107 are prepared in the UI screen 1100 to enable instant update of the background around the home base and the pitcher mound at the timing of the bottom of the fifth inning. Moreover, a rooting period in which illumination rapidly changes is assumed to be present in the bottom of the seventh inning. Accordingly, the button 1110 is prepared in the UI screen 1100 to enable stopping of the background update for all cameras at the timing of the bottom of the seventh inning.

Specifically, the "all cameras high speed" button 1101 and the "all cameras low speed" button 1102 are prepared in the UI screen 1100 for a period from the top of the first inning to the top of the fifth inning. The "all cameras high speed" button 1101 and the "all cameras low speed" button 1102 are buttons for setting the background update mode for all cameras in the period from the top of the first inning to the top of the fifth inning. The "all cameras high speed" button 1101 is a button for setting the background update mode to the "high speed" mode, and the "all cameras low speed" button 1102 is a button for setting the background update mode to the "low speed" mode.

The "catcher instant" button 1103 and the "pitcher instant" button 1104 are prepared in the UI screen 1100 for the bottom of the fifth inning. Moreover, the "all cameras background partial update ON" button 1105, the "all cameras low speed" button 1106, and the "all cameras background partial update OFF" button 1107 are prepared. The "catcher instant" button 1103 is a button for setting the background update mode to the "instant" mode for the cameras whose image capturing targets are set to the catcher, in the bottom of the fifth inning. The "pitcher instant" button 1104 is a button for setting the background update mode to the "instant" mode for the cameras whose image capturing targets are set to the pitcher, in the bottom of the fifth inning. The "all cameras background partial update ON" button 1105 is a button for setting the background partial update to enabled for all cameras in the bottom of the fifth inning. The "all cameras low speed" button 1106 is a button for setting the background update mode to the "low speed" mode for all cameras in the bottom of the fifth inning. The "all cameras background partial update OFF" button 1107 is a button for setting the background partial update to disabled for all cameras in the bottom of the fifth inning.

The "all cameras high speed" button 1108 and the "all cameras low speed" button 1109 are prepared in the UI screen 1100 for a period from the top of the sixth inning to the top of the seventh inning. The "all cameras high speed" button 1108 and the "all cameras low speed" button 1109 are buttons for setting the background update mode for all cameras in the period from the top of the sixth inning to the top of the seventh inning. The "all cameras high speed" button 1108 is a button for setting the background update mode to the "high speed" mode, and the "all cameras low speed" button 1109 is a button for setting the background update mode to the "low speed" mode.

The "all cameras stop" button 1110 is prepared in the UI screen 1100 for the bottom of the seventh inning. The "all cameras stop" button 1110 is a button for setting the background update mode to the "stop" mode for all cameras in the bottom of the seventh inning.

Moreover, the "all cameras high speed" button 1111 and the "all cameras low speed" button 1112 are prepared in the UI screen 1100 for a period from the top of the eighth inning to the bottom of the ninth inning. The "all cameras high speed" button 1111 and the "all cameras low speed" button 1112 are buttons for setting the background update mode for all cameras in the period from the top of the eighth inning to the bottom of the ninth inning. The "all cameras high speed" button 1111 is a button for setting the background update mode to "high speed", and the "all cameras low speed" button 1112 is a button for setting the background update mode to "low speed".

As described above, multiple buttons to which the same setting contents are assigned can be arranged in the UI screen 1100. Moreover, the buttons 1101 to 1112 illustrated in the UI screen 1100 are merely examples, and buttons corresponding to update speed and image capturing targets other than the pitcher or the catcher may be provided on the UI screen 1100.

### (Background Update Processing)

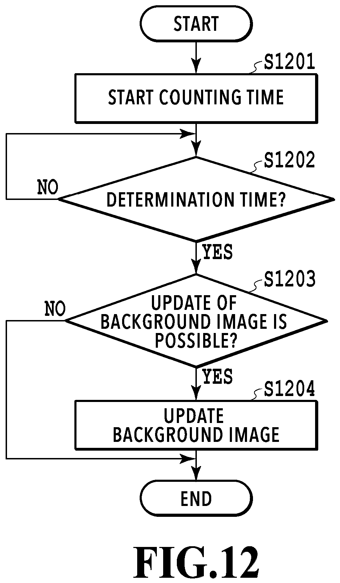

FIG. 12 is a flowchart illustrating a flow of background update processing. For example, the captured image obtained by the image capturing of each camera (image capturing apparatus) in the case where no object is present in the image capturing region of the camera (image capturing apparatus) is obtained as the background image.

First, in S1201, time is counted. Specifically, time elapsed from start of the background image update processing is counted.

Next, in S1202, the CPU 201 of the image processing apparatus determines whether the elapsed time has reached the determination time. The determination of S1202 is repeatedly performed until the determination time corresponding to the set update speed (low speed, mid-speed, high-speed, instant) elapses.

In S1203, the CPU 201 of the image processing apparatus determines whether or not the update of the background image is possible according to the set background update method. For example, in the case where the "high speed" mode is set, the determination performed once every four seconds by using the threshold is repeated four times, and then the final determination of whether or not each pixel is the background is performed. Then, in the case where the pixel is determined to be the background, the CPU 201 of the image processing apparatus determines that the update of the background image is possible. In the case where the CPU 201 of the image processing apparatus determines that the update of the background image is not possible (NO in S1203), the background update processing illustrated in FIG. 12 is terminated. In the case where the CPU 201 of the image processing apparatus determines that the update of the background image is possible (YES in S1203), the processing proceeds to S 1204.

In S1204, the CPU 201 of the information processing apparatus updates the background image. In the case where the update of the background image is completed, the flow of the background update processing illustrated in FIG. 12 is terminated.

Although the present embodiment is explained by using baseball as an example, the present embodiment can be applied also to other sports and other image capturing targets, and the image capturing targets are not limited to particular targets. For example, the present embodiment can be applied also to American football, rugby, basketball, soccer, cricket, racing (horse, boat, and bicycle), badminton, tennis, and the like, as long as the image capturing targets are those of a sport.

As explained above, in the present embodiment, the multiple cameras are classified into the multiple groups based on the target of interest of each of the multiple cameras in the image capturing, and the background generation method is individually set for each of the groups to which the cameras are classified. The multiple background images are updated according to the update method of the background image set for each of the groups to which the cameras are classified, by using the captured images obtained by one or multiple cameras included in the group. The background can be thereby updated at the moment where there is no object to be the foreground in the image capturing regions of one or multiple cameras included in the group, and the background can be updated also in the case where the object is present in the image capturing regions for a long period.

### [Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

According to the present embodiment, the background image can be updated.

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (21) comprising:
an obtain means (301) for obtaining a plurality of captured images obtained by image capturing of a plurality of image capturing units (11);
an extract means (303) for extracting foreground regions from the plurality of captured images by a background difference method; and
a generate means (304) for generating background images used in the background difference method while updating the background images based on the plurality of captured images, wherein
the generate means (304) updates the background images according to an update method of the background images set for each of groups to which the plurality of image capturing units (11) are classified based on targets of interest of the respective image capturing units (11) in the image capturing, by using the captured images obtained by one or a plurality of the image capturing units (11) included in the group.

2. The image processing apparatus according to claim 1, wherein the update method is set based on a user operation through a UI screen.

3. The image processing apparatus according to claim 2, wherein a speed at which the background images are updated is set as the update method based on the user operation through the UI screen.

4. The image processing apparatus according to claim 3, wherein the speed at which the background images are updated is set for each of the groups to which the image capturing units are classified.

5. The image processing apparatus according to claim 3 or 4, wherein the speed at which the background images are updated is set for units in which a game captured by the plurality of image capturing units progresses.

6. The image processing apparatus according to any one of claims 3 to 5, wherein one of a stop mode in which the update of the background images is stopped, an instant mode in which the background images are instantly updated at first speed, a high-speed mode in which the background images are updated at second speed lower than the first speed, a mid-speed mode in which the background images are updated at third speed lower than the second speed, and a low-speed mode in which the background images are updated at fourth speed lower than the third speed is set as the speed at which the background images are updated.

7. The image processing apparatus according to claim 6, wherein, in the case where the instant mode is set, in the generating, the captured images obtained by the image capturing of the image capturing units are directly reflected in the background images.

8. The image processing apparatus according to any one of claims 2 to 7, wherein using partial regions in the captured images obtained by the image capturing of the image capturing units in the updating of the background images is set as the update method based on the user operation through the UI screen.

9. The image processing apparatus according to any one of claims 1 to 8, wherein each of the plurality of image capturing units is classified into one of the groups associated with an elevation angle of the each of the plurality of image capturing units in the image capturing.

10. The image processing apparatus according to any one of claims 1 to 9, wherein one of an update cycle at which the background images are updated, determination time in which whether each of pixels of the captured images is the background image or not is determined, a determination cycle at which whether each of pixels of the captured images is the background image or not is determined, and a determination threshold of the background images is set as the update method.

11. A control apparatus comprising:
one or more hardware processors; and
one or more memories storing one or more programs configured to be executed by the one or more hardware processors, the one or more programs including instructions for:
classifying a plurality of image capturing units into a plurality of groups based on targets of interest of the respective image capturing units in image capturing; and
for each of the groups to which the image capturing units are classified, setting an update method of background images used to extract foreground regions from captured images by a background difference method, the captured images obtained by image capturing of one or a plurality of the image capturing units included in the group.

12. A system comprising:
an image processing apparatus; and
a control apparatus for controlling the image processing apparatus, wherein
the image processing apparatus comprises
an obtaining means for obtaining a plurality of captured images obtained by image capturing of a plurality of image capturing units,
an extraction means for extracting foreground regions from the plurality of captured images by a background difference method, and
a generation means for generating background images used in the background difference method while updating the background images based on the plurality of captured images,
the control apparatus comprises a setting means for setting an update method of the background images,
the setting means
classifies the plurality of image capturing units to a plurality of groups based on targets of interest of the respective image capturing units in the image capturing, and
sets the update method of the background images for each of the groups to which the image capturing units are classified, and
the generation means updates the background images according to the update method set for each of the groups to which the image capturing units are classified, by using the captured images obtained by one or a plurality of the image capturing units included in the group.

13. A control method of an image forming apparatus, the control method comprising the steps of:
obtaining a plurality of captured images obtained by image capturing of a plurality of image capturing units;
extracting foreground regions from the plurality of captured images by a background difference method; and
generating background images used in the background difference method while updating the background images based on the plurality of captured images, wherein
in the generating, the background images are updated according to an update method of the background images set for each of groups to which the plurality of image capturing units are classified based on targets of interest of the respective image capturing units in the image capturing, by using the captured images obtained by one or a plurality of the image capturing units included in the group.

14. A program for causing a computer to function as the image processing apparatus according to any one of claims 1 to 10.
